Europäisches Patentamt

European Patent Office

Office européen des brevets

(11) Publication number: **0 254 337**
A1

(12) **EUROPEAN PATENT APPLICATION**

(21) Application number: **87201189.5**

(22) Date of filing: **23.06.87**

(51) Int.Cl.³: **A 01 F 15/00**
**A 01 F 15/14**

(30) Priority: **23.06.86 NL 8601626**

(43) Date of publication of application:
**27.01.88 Bulletin 88/4**

(84) Designated Contracting States:
**DE FR GB NL**

(71) Applicant: **Oldenhuis, Beno**
**Buitenlust 25**
**NL-9971 BP Ulrum(NL)**

(72) Inventor: **Oldenhuis, Beno**
**Buitenlust 25**
**NL-9971 BP Ulrum(NL)**

(74) Representative: **Smulders, Theodorus A.H.J. et al,**
**Vereenigde Octrooibureaux Nieuwe Parklaan 107**
**NL-2587 BP 's-Gravenhage(NL)**

(54) Round baler.

(57) A round baler for compacting produce into cylindrical bales, comprising a compacting chamber formed by a first array (21) of circulatable endless parallel pressure belts, a pick-up member (5) arranged at the front of the round baler ahead of the compacting chamber, conveyor means (7,8,9,10) disposed between said pick-up member (5) and said compacting chamber for conducting the produce from said pick-up member (5) to said compacting chamber, as well as means for ejecting the resulting cylindrical bale from said compacting chamber. In the run between said conveyor means and said compacting chamber, there is arranged a pre-compacting chamber (21') wherein the produce supplied is caused to form a core of a bale if said compacting chamber contains no bale or a bale of predetermined diameter and through which the produce is passed if said compacting chamber contains a bale of a diameter smaller than the predetermined one. Means are provided for passing the core formed in said pre-compacting chamber (21') to said compacting chamber.

FIG.1

Title: A round baler

This invention relates to a round baler for compacting produce into cylindrical bales, comprising a compacting chamber formed by a first array of circulatable endless, parallel pressure belts, a pick-up member arranged at the front of the round baler, ahead of said compacting chamber, conveyor means disposed between said pick-up member and said compacting chamber for conducting the produce from said pick-up member to said compacting chamber, as well as means for ejecting the resulting cylindrical bale from said compacting chamber.

A similar round baler is known from Dutch patent application 84,02830. At its front, this known round baler picks up the cut off produce lying on the field by means of the pick-up member. The produce is conducted further in the round baler from the front to the rear and is supplied to a compacting chamber where it is coiled to form a cylindrical bale. The bale is finally bound by means of a cord and can then be removed from the compacting chamber.

The prior baler functions satisfactorily but has nevertheless a number of drawbacks. A first drawback is that the known baler can only produce bales of a relatively low weight-volume ratio. To minimize the transport cost per unit of weight to be transported, it is desirable, however, to produce hard bales with as high a weight-volume ratio as possible. Moreover, with a high weight-volume ratio, it is possible to considerably reduce the number of rides from e.g. the field to a barn, so that valuable time can be saved. A second drawback is that the known baler cannot be used continuously. After a bale of a given diameter has been formed in the compacting chamber, it has to be stopped. This precludes an effective continuous use of the known round baler and, moreover, valuable working hours are lost. A third drawback is that substantial driving power is needed to compact the produce to bales of a somewhat acceptable weight-volume ratio.

It is an object of the present invention to remove these drawbacks.

To that end, according to the present invention, the round baler of the above described type is characterized in that in the path between the conveyor means and the compacting chamber, there is arranged a pre-compacting chamber wherein the produce supplied is caused to form a core of a bale if said compacting chamber contains no bale or a bale having a predetermined diameter and through which the produce is passed if the compacting chamber contains a bale of a diameter smaller than the predetermined one, and that means are provided for passing the core formed in the pre-compacting chamber to the compacting chamber.

One embodiment of the present invention will now be described, by way of example, with reference to the accompanying drawings, in which:

Fig. 1 is a diagrammatic longitudinal section of an embodiment of the round baler according to the present invention in a first phase wherein a core is formed in the pre-compacting chamber;

Fig. 2 is a longitudinal section of the round baler shown in Fig. 1 in a second phase wherein a core is formed in the pre-compacting chamber;

Fig. 3 is a longitudinal section of the round baler shown in Fig. 1 in a third phase wherein the pre-formed core is passed from the pre-compacting chamber to the compacting chamber;

Fig. 4 is a longitudinal section of the round baler of Fig. 1 in a fourth phase wherein a round bale is present in the compacting chamber; and

Fig. 5 shows a preferred embodiment of the net receiving drum.

The round baler shown in the drawings comprises a housing 1 having a front wall 2, a rear wall 3 and side walls, not shown. The housing rests on a carriage including wheels 4. The round baler is further provided with a coupling means, not shown, connected to said housing and/or said carriage for coupling to e.g. a tractor.

A pick-up member 5 is disposed at the front of the round baler. Pick-up member 5 is provided with upright pins 6, which during rotation of the pick-up member 5, pick up the cut produce lying on the field and pass it further in a more or less coherent strip backwards to rollers 7, 8 and 9. Rollers 7, 8, 9 in this embodiment are mounted and/or dimensioned in such a manner that the top face of roller 9 lies slightly above that of roller 8, which, again, lies above the top face of roller 7, and the rollers are rotated so that the produce is conducted in rearward direction into the round baler. Above rollers 7, 8, 9 there is provided an endless conveyor belt 10, horizontal in this embodiment, having a front and a rear return roller 13, and 11, respectively. The bottom run of the conveyor belt is driven in rearward direction of the round baler. The produce is increasingly compacted in the wedge-shaped space between rollers 7, 8 on the one hand and the conveyor belt 10 on the other. This compaction is intensified when the produce is passed between roller 9 and conveyor belt 10, while a hold-down roller 12, placed adjacent roller 9 between return rollers 11, 13 of the conveyor belt, at the top against the bottom run of said conveyor belt, ensures that belt 10 cannot bend away. The produce is additionally compacted between roller 9 and return roller 11 of conveyor belt 10, which may be spring-suspended. Rollers 7, 8, 9 in conjunction with conveyor belt 10, have as major tasks to pass the produce further rearwards and to compact it in a wedge-shaped space. Both tasks may naturally also be performed in a different manner or by other means. For instance, rollers 7, 8, 9 can be positioned at equal level, while conveyor belt 10 may be arranged downwardly inclined in rearward direction. It is also possible to replace rollers 7, 8, 9 by a conveyor belt, possibly provided with back-up rollers.

Conveyor belt 10 preferably has a slightly larger peripheral speed than roller 9, so that the produce emerging from the nip between roller 9 and conveyor belt 10 is oriented rearwards and, slightly downwards. In the known round balers, use is made of a lattice for the produce advanced rearwardly of the round baler to be deflected in a somewhat downward direction. The produce, especially when it is damp, then has the tendency to adhere to the lattice, so that the machine may become jammed. This, however, is eliminated due to the use of the conveyor belt 10 at the relatively high rotational speed relative to the speed of roller 9.

The compacted produce comes out of the nip between conveyor belt 10 and roller 9 in a rearward and slightly downward direction into a pre-compacting chamber 21', which is defined at its bottom by an endless conveyor belt 14, substantially horizontal in this embodiment, running over return rollers 15, 16 and over back-up rollers 17-20, and positioned directly behind roller 9. Above conveyor belt 14 there are provided a plurality of endless parallel pressure belts 21 running over a plurality of return rollers 22-26. Furthermore, a tensioning roller 27 runs against pressure belts 21.

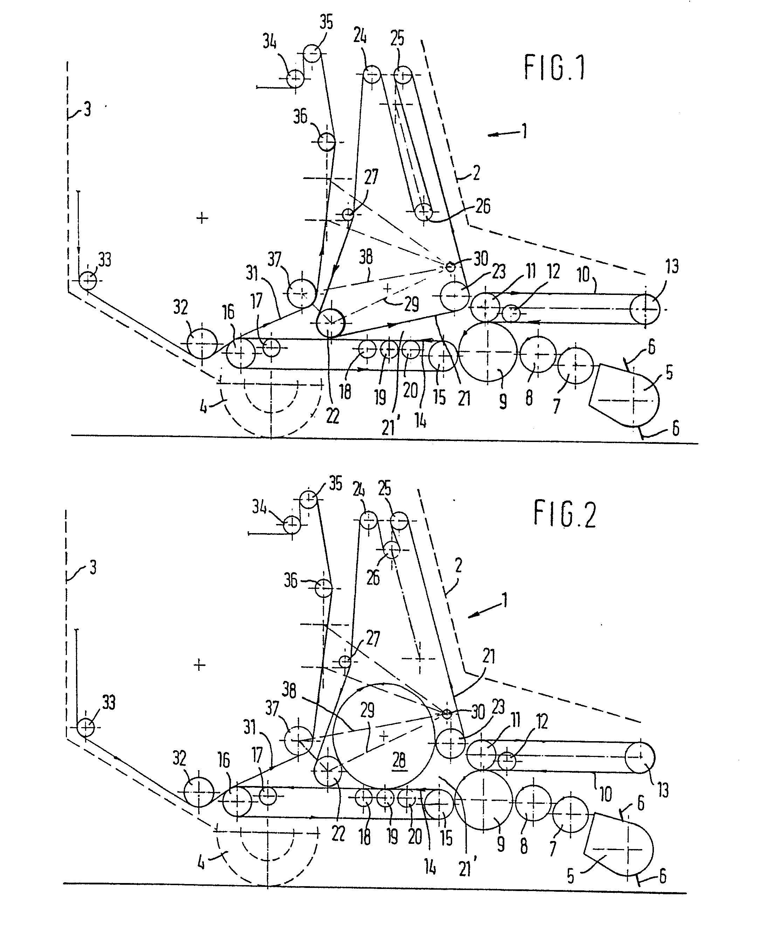

From return roller 22, which in the operating phase shown in Fig. 1 is disposed just above the mid-range of conveyor belt 14, the lower run of pressure belts 21 slopes upwardly in the direction of the front of the round baler. Conveyor belt 14 is driven so that its upper run moves in rearward direction, while pressure belts 21 are driven so that their lower run moves in forward direction. The produce is carried along by conveyor belt 14 and subsequently, in the pre-compacting chamber 21' adjacent return roller 22, reversed in direction of movement by the lower run of belts 21 so that a rolling effect is produced. As a result, a core of a bale 28 begins to develop in the pre-compacting chamber 21' adjacent return roller 22. Owing to the rolling effect, the core can be extended in cylindrical diametrical sense. Pre-compacting chamber 21' thereby increases in volume, because the pressure belts 21 deflect outwardly in the lower part between return rollers 22 and 23 (Fig. 2). To that end, return roller 26 is formed e.g. as a spring-loaded dancing roller, so that the pressure belts remain under the desired tension at the same length.

Return roller 11 of conveyor belt 10 is preferably slightly off-set backwardly relative to roller 9, so that the produce is oriented sufficiently downwards and cannot be seized by the forwardly moving lower run 21 adjacent return roller 23.

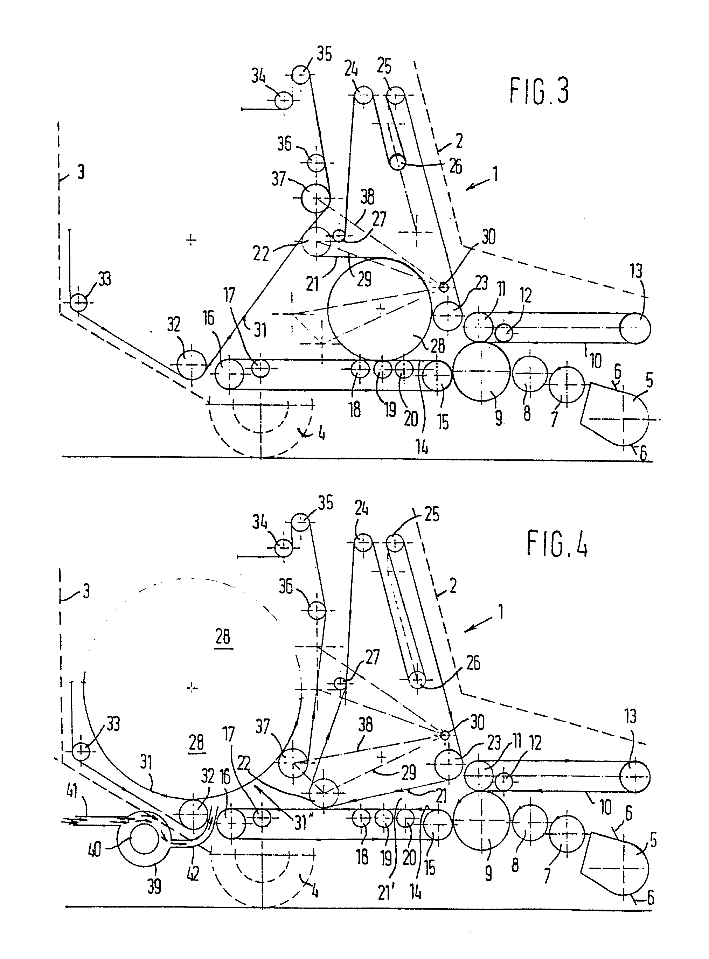

When the core of the bale 28 has reached a desired diameter, which can be detected for instance by means of a stop member, the driving mechanism of the pressure belts 21 is stopped, e.g. through a control means for the driving mechanism which is actuated by said stop member. Return roller 22 is then swivelled away upwardly, e.g. by means of an arm 29, about a pivot 30 (Fig. 3). Simultaneously, a return roller 37 is also swivelled upwardly, e.g. by an arm 38, about pivot 30. Said return roller 37 forms part of an array of return rollers, rollers 32-37 of which are shown, over which run pressure belts 31. Belts 31 form an array of belts for the compacting chamber. By swivelling return rollers 22 and 37 upwardly, the core of the bale 28 is released. The core will be carried along by conveyor belt 14 in rearward direction, as the pressure belts 21 are stationary. The core is thereby pressed against a part of the pressure belts 31 situated between return rollers 32 and 37 and which slopes upwardly and forwardly and is driven in that same direction. The core is forcibly pressed against this part of the pressure belts so that this will become deflected into the space originally enclosed by the pressure belts 31, thereby forming a compacting chamber 31' wherein the core is received.

The moment when the core is received entirely in the space originally enclosed by pressure belts 31, both return rollers 22 and 37 are swivelled back into their original low position by arms 29, and 38 respectively (Fig. 4). Pressure belts 21 are thereafter driven again but now oppositely to the original direction, i.e. in rearward direction. Pre-compacting chamber 21' now functions as a conveyor system and as a compacting system by means of conveyor belt 14 and pressure belts 21, which are now driven in the same direction as conveyor belt 14, because conveyor belt 14 and the lower inclined part of the pressure belts 21 enclose a wedge-shaped space narrowing in rearward direction, i.e. the direction of movement of the produce. The produce supplied to chamber 31', consequently, is additionally compacted between return roller 22 and conveyor belt 14 before it is added to the bale 28.

After leaving the nip between return roller 22 and conveyor belt 14, the produce is transported by the latter to return roller 32. The produce is carried along by pressure belts 31 adjacent return roller 32 and is thereby compacted again between return roller 32 and the ever heavier bale 28, and subsequently dragged along and taken up.

When the bale has acquired the desired diameter, it can be bound e.g. by means of a cord or a net. In a special embodiment of the baler according to the present invention, as shown in Fig. 4, a drum 39 is provided underneath the housing of the baler. Drum 39 contains a coiled net 40 and is provided with a blow pipe 41 and an outlet branch 42 whose length transverse to the plane of drawing is chosen to match the length of the cylindrical bales being formed and which is disposed between rollers 16 and 32 or can be swivelled between them. By blowing air through blow pipe 41, which may be connected for that purpose to a compressed-air source, not shown, the net 40 in outlet branch 42 is entrained by the air escaping therethrough and is forced between the pressure belts 31 and the rotating bale 28. The net is moved along with the bale, which has a rough surface without more ado. The net is thereby drawn tightly around the bale. When the net occupies about 1½-2 times the circumference of the bale, this portion can be cut loose from the net remaining in the drum 39 in a manner known but not shown. The net need not be tied to the bale, for that matter, on account of the above-mentioned rough, tenacious surface of the bale.

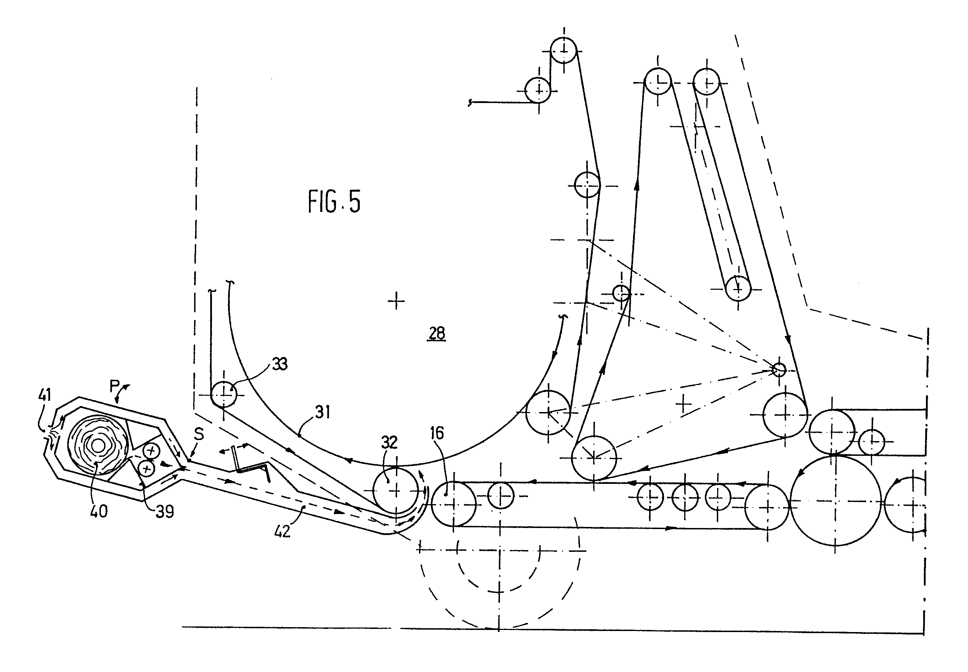

Fig. 5 shows a preferred embodiment of the net receiving drum 39, in which the upper part of the drum can be swung back about a hinge S according to the arrows P. When the upper part is in the raised position a net roll 40 can be rapidly placed in the drum, with the free leading end of the net in the beginning of outlet branch 42. This also ensures that, upon the putting in operation, the net is entrained reliably in the direction of the rotating bale 23.

After the bale has been bound, it can be removed from the round baler e.g. by swivelling away return rollers 32,33 rearwards in a known manner, so that the bale can drop out of the compacting chamber 31' onto the ground.

During the binding of the bale, the baler according to the present invention, unlike the known round baler, need not be stopped. By again reversing the driving direction of the pressure belts 21, i.e. in such a manner that the lower run thereof moves forwardly between return rollers 22, 23, a new core will develop during the binding adjacent return roller 22 between pressure belts 21 and the conveyor belt and no produce will be passed between return roller 22 and conveyor belt 14. The full-size bale already formed can thus be bound in an undisturbed manner, without the supply of new produce, while the round baler nevertheless continues to function, picks up produce, thereby forming the core of a new bale. The invention thus provides a continuously operating round baler.

A high weight-volume ratio of the eventual bale is obtained with the round baler according to the present invention by stepwise compacting the produce. This stepwise compaction, comprising five stages in total , i.e. a first compaction between conveyor belt 10 and rollers 7 and 8, a second compaction between return roller 11 and roller 9, a third compaction between pressure belts 21 and conveyor belt 14, a fourth compaction between return roller 22 and conveyor belt 14 and, finally, a fifth compaction between the bale and return roller 32, moreover requires, in total , relatively little power, as the compaction takes place very gradually and does not have to be forced in a single  step, as is the case with the known round baler, in which much power is lost.

It is observed that, in view of the above, various modifications will be readily apparent to one skilled in the art. For instance, the round baler according to the present invention may be provided with otherwise known control means through which the tension in the pressure belts can be controlled and the density of the bales can be varied. Such modifications are deemed to fall within the scope of the present invention.

*****

* C L A I M S *

1. A round baler for compacting produce into cylindrical bales, comprising a compacting chamber formed by a first array of circulatable endless, parallel pressure belts, a pick-up member arranged at the front of the round baler ahead of the compacting chamber, conveyor means disposed between said pick-up member and said compacting chamber for conducting the produce from said pick-up member to said compacting chamber, as well as means for ejecting the resulting cylindrical bale from said compacting chamber, characterized in that in the path between said conveyor means and said compacting chamber, there is arranged a pre-compacting chamber wherein the produce supplied  is caused to form a core of a bale if said compacting chamber contains no bale or a bale of predetermined diameter and through which the produce is passed if said compacting chamber contains a bale of a diameter smaller than the predetermined one, means being provided for passing the core formed in said pre-compacting chamber to said compacting chamber.

2. A round baler, as claimed in claim 1, characterized in that the pre-compacting chamber is defined by a top run of an endless conveyor belt, drivable in the direction of the rear of the baler, as well as by a part of a second array of endless, parallel, bidirectionally drivable pressure belts, said part sloping upwardly virtually from the endless conveyor belt in the direction of the front of the baler, and that at least a portion of the part of the second array of pressure belts defining the pre-compacting chamber can be swivelled away, thereby releasing the core of a bale formed in the pre-compacting chamber.

3. A round baler as claimed in claim 1 or 2, characterized in that the second array of endless pressure belts is diverted to slope upwardly in the direction of the front of the baler by means of a pressure and return roller positioned just above the conveyor belt.

4. A round baler as claimed in claim 3, characterized in that the pressure and return roller can be swivelled away.

5. A round baler as claimed in claim 4, characterized in that the pressure and return roller can be swivelled by means of a pivotally mounted arm.

6. A round baler as claimed in any one of claims 1-5, characterized in that the conveyor belt extends up to a part of the first array of belts defining the compacting chamber and inclined upwardly in the direction of the front of the round baler.

7. A round baler as claimed in claim 6, characterized in that the upwardly inclined part of the first array of belts provided between two return rollers, can be extended by means of a swing-aside attachment of at least one of the two return rollers of the part.

8. A round baler as claimed in claim 7, characterized in that at least one of the two return rollers of the upwardly inclined part of the first array of belts can be swung by means of a pivotally attached arm.

9. A round baler as claimed in any one of claims 4-8, characterized in that the pressure and return roller of the second array of belts is connected constructively to the swing-aside return roller of the first array of belts.

10. A round baler as claimed in claim 5, 8 and 9, characterized in that the pivotally attached arm of the pressure and return roller of the second array of belts and the pivoting arms of the swing-aside return roller of the first array of belts are interconnected and are pivotable about the same pivot.

11. A round baler as claimed in any one of claims 2-10, characterized in that the conveyor means define a transport track terminating slightly above the level of the beginning of the conveyor belt.

12. A round baler as claimed in any of the preceding claims, characterized in that above the conveyor means, there is positioned a second endless conveyor belt enclosing with the conveyor means a space narrowing in the direction of transport.

13. A round baler as claimed in claim 12, characterized in that the conveyor means comprise a plurality of parallel rollers situated one behind the other in the direction of transport, and that the centre of the roller being the last as viewed in the transport direction lies slightly before the centre of the return roller disposed at the corresponding end of the second conveyor belt.

14. A round baler as claimed in claim 13, characterized in that the rollers of the conveyor means are provided with an endless conveyor belt.

15. A rounded baler as claimed in any one of claims 12-14, characterized in that, in operation, the peripheral speed of the second endless conveyor belt is higher than that of at least the last roller of the conveyor means.

16. A round baler as claimed in any one of claims 12-15, characterized in that adjacent the rearmost return roller of the second conveyor belt, as viewed in the direction of transport, there is provided a hold-down roller coacting with the inner surface of the part of the conveyor belt facing the conveyor means.

17. A round baler as claimed in any of the preceding claims, characterized in that adjacent the compacting chamber, there are provided binding means for passing a net between the end of the conveyor belt remote from the front of the round baler and the lowermost return roller of the part of the first array of belts defining the compacting chamber.

18. A round baler as claimed in claim 17, characterized in that the binding means comprise a drum disposed underneath the round baler, said drum having a net coiled therein, said drum being provided with an outlet branch through which a net end extends and by means of which the net end can be brought between the conveyor belt and the lowermost return roller of the part of the first array of belts defining the compacting chamber, as well as means for conducting the net out of the outlet branch.

19. A round baler as claimed in claim 18, characterized in that the drum is provided with a blow pipe for blowing air into said drum in such a manner that the net end is conducted out of the outlet branch.

20. A round baler as claimed in claim 18 or 19, characterized in that at least the outlet branch of the drum can be swivelled between the return roller of the conveyor belt and the lowermost return roller of the part of the first array of belts defining the compacting chamber.

21. A round baler as claimed in any one of claims 17-20, characterized in that the net receiving drum has an upper part that can be swung back.

&&&&&

FIG.1

FIG.2

FIG.3

FIG.4

FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | EP-A-0 115 608  (WEBB)<br><br>* Page 6, paragraph 4;  page 7, figure 1 * | 1-4,6, 9 | A 01 F  15/00<br>A 01 F  15/14 |
| X | EP-A-0 149 368  (DEERE)<br><br>* Page 11, paragraphs 4,5; pages 12,13; figures 1-3 * | 1,2,4, 5,7 | |
| X | EP-A-0 064 117  (DEERE)<br><br>* Page 5, paragraphs 5,6;  pages 6,7; figures 2-15 * | 1,2,4, 6,9 | |
| X | EP-A-0 156 041  (SPERRY)<br>* Page 4, paragraphs 6,7 - page 11; figures 1-8 * | 1-6 | |
| A | EP-A-0 174 703  (MULTINORM)<br>* Pages 2-5; figures 1-5 * | 1 | TECHNICAL FIELDS SEARCHED (Int. Cl 4)<br><br>A 01 F |
| A | US-A-3 016 675  (HARRER)<br>* Column 2, lines 34-72;  columns 3,4; figures 1-3 * | 11,12 | |
| A | GB-A-2 003 716  (K.H.D.)<br>* Page 2, lines 45-80; figure 1 * | 11 | |
| | ---     -/- | | |

The present search report has been drawn up for all claims

| Place of search | Date of completion of the search | Examiner |
|---|---|---|
| THE HAGUE | 05-10-1987 | VERMANDER R.H. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-4 172 354 (VERMEER) | | |
| A | GB-A-2 163 701 (CLAAS) * Page 1, lines 67-116; figures 1,2 * | 17,19 | |
| A | FR-A-2 530 406 (CLAAS) * Page 2, lines 28-39 * | 17 | |
| A | EP-A-0 126 278 (POLYDRESS) * Page 5, paragraph 4; figures 1,2 * | 17 | |

TECHNICAL FIELDS SEARCHED (Int. Cl.4)

The present search report has been drawn up for all claims

| Place of search | Date of completion of the search | Examiner |
|---|---|---|
| THE HAGUE | 05-10-1987 | VERMANDER R.H. |